# EUROPEAN PATENT APPLICATION

(11) **EP 4 721 565 A1**
(43) Date of publication of application: **08.04.2026**
(21) Application number: 24736124.9
(22) Date of filing: 29.05.2024
(51) Int. Cl.: A01N 47/40, A01N 65/36, A01N 65/08, A01P 7/04

(54) **INSECTICIDAL FORMULATION IN THE FORM OF AN OIL DISPERSION COMPRISING ACETAMIPRID, KUMQUAT OIL AND BLACKCURRANT SEED OIL**

(30) Priority: 30.05.2023 PT 2023118686
(71) Applicant: Ascenza Agro, S.A., 2910-440 Setúbal (PT)
(72) Inventor: ALVES CORREIA, Rui Pedro, 1800-424 LISBOA (PT)
(74) Representative: RCF - Protecting Innovation, S.A.
(86) International application number: PCT/PT2024/050018
(87) International publication number: WO 2024/248644

(57) **Abstract**

The present invention relates to an insecticidal formulation in the form of an oil dispersion (OD), comprising acetamiprid, kumquat oil and blackcurrant seed oil and to a process for controlling aphids, thrips and whiteflies in greenhouse horticultural crops and aphids on fruit plants (pome fruits and stone fruits).

## Description

### FIELD OF INVENTION

The present invention relates to an insecticidal formulation in the form of an oil dispersion (OD), comprising acetamiprid, kumquat oil and blackcurrant seed oil, and its use in crop protection.

### BACKGROUND OF THE INVENTION

Acetamiprid 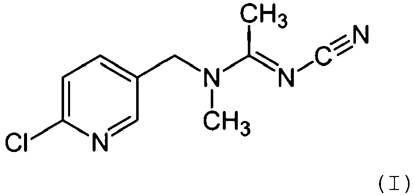 is an insecticide from the chloronicotinyl (neonicotinoids) family first described by Nippon Soda Co. Ltd, in international patent application WO9104965. The product has excellent systemic and translaminar activity against insects of the orders Hemiptera, Thysanoptera, Coleoptera and Lepidoptera.

Kumquat oil is obtained by cold pressing the pulp of kumquat *(Fortunella japonica)* and is essentially rich in limonene, but also contains other terpenes such as myrcene, α-pinene or β-phellandrene and a terpene alcohol, α-terpineol.

Blackcurrant seed oil (Ribes nigrum) is rich in fatty acids such as oleic acid, linoleic acid, γ-linolenic acid and α-linolenic acid and also in polyphenols, in particular anthocyanins such as delphinidin-3-rutinoside, delphinidin-3-glucoside, cyanidin-3-rutinoside and cyanidin-3-glucoside, and flavonoids such as myricetin and quercetin.

Patent EP1725104 (Bayer) discloses an OD formulation of a nicotinoid, containing an alkoxylated alkanol (penetrating agent), a vegetable or mineral oil, at least one anionic surfactant and at least one nonionic surfactant.

Patent EP2225940 (GAT) refers to an OD formulation containing at least one nicotinoid, a mixture of polymeric dispersants, a mixture of alkoxylated fatty alcohols with an HLB of 12 to 16, at least one alkoxylated sorbitan derivative with an HLB of 12 to 16, a sodium or calcium alkylbenzenesulfonate, a di-, tri- or tetravalent cationic salt and an oil.

None of these patents mention or suggest mixing acetamiprid with kumquat oil or blackcurrant seed oil.

Patent AU2012200849 (AECI LTD), discloses an aqueous formulation comprising abamectin or acetamiprid, a monoterpene, a solvent, a mixture of surfactants and water.

This patent does not disclose or suggest a formulation containing acetamiprid, kumquat oil and blackcurrant seed oil, nor does it refer to a formulation in the form of an oil dispersion.

International patent application WO2021105930 (Oro Agri) refers to an adjuvant containing at least one natural or synthetic oil containing polyphenols, including blackcurrant seed oil (Ribes nigrum), at least one nonionic surfactant, at least one anionic surfactant and at least one pH modifier, wherein this adjuvant may also contain kumquat oil (*Citrus japonica*).

This patent application does not mention or suggest the combination of this adjuvant with acetamiprid and, since it is an aqueous formulation, it also does not suggest the combination of acetamiprid, kumquat oil and blackcurrant seed oil in a formulation presented in the form of a dispersion in oil.

### DETAILED DESCRIPTION OF THE INVENTION

There is a tendency to reduce the applications of synthetic active substances in crop protection. One of the objectives of the European Commission's "Farm to Fork" strategy is to reduce the consumption of chemical pesticides by around 50% by 2030.

In this context, it is foreseeable that there will be limitations on the use of chemical pesticides, for example by reducing the number of authorized treatments and/or the amount of active substance to be used per hectare.

It is therefore necessary to develop new concepts that allow a reduction in the amount of active substance to be used per hectare but maintain the levels of efficacy necessary for profitable agricultural exploitation.

Surprisingly, it was found that the combination of acetamiprid, kumquat oil and blackcurrant seed oil in a formulation presented in the form of oil dispersion (OD) allows a substantial reduction in the amount of acetamiprid to be used per hectare, which is currently 100 g/ha, with adequate efficacy levels.

An object of the present invention is to provide a new insecticidal formulation, presented in the form of an oil dispersion, characterized by comprising acetamiprid, kumquat oil and blackcurrant seed oil.

In an embodiment of the invention, the formulation additionally comprises at least one non-aqueous dispersant, at least one emulsifier, at least one aqueous dispersant, at least one thickening agent and at least one vegetable oil or an ester derived from a vegetable oil.

In an embodiment of the invention, the formulation comprises acetamiprid, in a concentration range between 30 and 60 g/liter.

In an embodiment of the invention, the formulation additionally comprises kumquat oil in a concentration range between 30 and 60 g/liter and blackcurrant seed oil in a concentration range between 200 and 300 g/liter.

In a preferred embodiment of the invention, the formulation comprises 60 g/liter of acetamiprid, 60 g/l of kumquat oil and 300 g/liter of blackcurrant seed oil.

In a preferred embodiment of the invention, the formulation additionally comprises 20 to 30 g/liter of at least one non-aqueous dispersant, 150 to 250 g/liter of at least one emulsifier, 20 to 30 g/liter of at least one aqueous dispersant and 20 to 35 g/liter of at least one thickening agent.

It is also an object of the present invention to provide a process for controlling aphids, thrips and whiteflies in greenhouse horticultural crops and aphids in fruit plants (pome fruits and stone fruits), comprising a step of applying the formulation according to the invention.

In an embodiment of the invention, the application dose of acetamiprid is in the range of 30 to 60 g/ha.

In a preferred embodiment of the invention, the application dose of acetamiprid is 45 g/ha.

The oil dispersion (OD) according to the invention can be prepared according to procedures known to the person skilled in the art.

Acetamiprid is previously ground in an air jet mill together with a synthetic silica, commercially available under the name Sipernat^{®} 22S, from Evonik, to facilitate the grinding operation, until a granulometry such that 90% of the particles have a size below than 10 µm, and then mixed with the remaining components of the formulation (dispersants, emulsifiers, thickeners and vegetable oils or esters derived from vegetable oils) in a container equipped with a high shear mixer.

Preferred among non-aqueous polymeric dispersants are polyisobutylene succinic anhydride-polyethylene glycol, available under the commercial name Atlox^{®} 4914, from Croda Crop Care, polymers of ethoxylated sorbitol reacted with fatty acids, available under the commercial name Atlox^{®} 4916, from Croda Crop Care, and their mixtures.

Preferred among the aqueous polymeric dispersants are esters of alkoxylated diethylethanolamine, available under the commercial name Atlox^{®} 4915, from Croda Crop Care, modified styrene acrylic copolymers, available under the commercial name Atlox^{®} Metasperse 550S, from Crop Care, and their mixtures.

Preferred among the emulsifiers are ethoxylated sorbitol esters derived from oleic acid, available under the commercial name Atlas^{®} G 1086, from Croda Crop Care, ethoxylated sorbitan esters derived from natural fatty acids (lauric acid), available under the trade name Tween^{®} 24, from Croda Crop Care, and their mixtures.

Preferred among the thickening agents are hydrophobic silicas, treated with a polydimethylsiloxane, available under the commercial name Aerosil^{®} R202, from Evonik, hydrophilic silicas, available under the commercial name Aerosil^{®} 200, from Evonik, and their mixtures.

Among vegetable oils or esters derived from vegetable oils, rapeseed oil methyl ester is especially preferred.

### Formulation examples

The formulations made according to the invention have the following compositions (in g/liter) :

**Table 1. Composition of the formulations according to the invention**

| **Components** | **Example 1.1** | **Example 1.2** | **Example 1.3** |
|---|---|---|---|
| Acetamiprid | 30, 0 | 60,0 | 60, 0 |
| Sipernat^{®} 22 S | 1, 5 | 3,0 | 3, 0 |
| Kumquat oil | 30, 0 | 60,0 | 60, 0 |
| Blackcurrant seed oil | 150,0 | 300,0 | 300,0 |
| Atlox^{®} Metasperse 550S | 25, 0 | 25,0 | 0 |
| Atlox^{®} 4915 | 0 | 0 | 25, 0 |
| Atlas^{®} G 1086 | 125,0 | 125,0 | 125,0 |
| Atlox^{®} 4914 | 30, 0 | 30,0 | 30, 0 |
| Tween^{®} 24 | 100,0 | 100,0 | 100,0 |
| Aerosil^{®} R202 | 8, 0 | 8,0 | 8, 0 |
| Aerosil^{®} 200 | 24, 0 | 24,0 | 24, 0 |
| Rapeseed oil methyl ester | 426,5 | 235,0 | 235, 0 |

### Efficacy trials

Efficacy trials were carried out using the following formulations:
- a commercial formulation of acetamiprid in the form of a soluble concentrate (SL), containing 200 g/L of active substance, designated as A200SL in table 4, with the following composition:

**Table 2. Composition of the commercial formulation A200SL**

| **Components** | **g/litre** |
|---|---|
| Acetamiprid | 200,0 |
| Ethoxylated castor oil, with 36 mol of ethylene oxide, CAS number 61791-12-6 | 67,8 |
| Gamma-butyrolactone | 429, 4 |
| Dimethyl sulfoxide | 432, 8 |

- two formulations containing acetamiprid, kumquat oil and blackcurrant seed oil, in the form of oil dispersion (OD), with the compositions according to examples 1.1 and 1.2 of Table 1, designated by A300DHy and A600DHy in table 4.
- a formulation containing acetamiprid, kumquat oil and blackcurrant seed oil, in the form of soluble concentrate (SL), designated as A15SLHy in table 4, with the following composition:

**Table 3. composition of A15SLHy formulation**

| **Components** | **g/litre** |
|---|---|
| Acetamiprid | 15,00 |
| Dimethyl sulfoxide | 100,00 |
| Ethanol | 50,00 |
| Glycerine | 145,80 |
| Water | 75,95 |
| Sodium dodecylbenzene sulfonate, CAS number 25155-30-0 | 146,66 |
| Sodium hydroxide | 51,73 |
| Sodium alkyl (C₁₂-C₁₄) ether sulfate 70%, CAS number 68891-38-3 | 86,29 |
| Ethoxylated secondary alcohol, C₁₁-C₁₅, CAS number 68131-40-8 | 140, 62 |
| Sodium sulfonates C14-16- hydroxyalkane and C14-16-alkene, CAS number 68439-57-6 | 28,94 |
| Kumquat oil | 17,06 |
| Blackcurrant seed oil | 86,51 |
| Urea | 13,82 |
| Sorbitan monooleate ethoxylated, CAS number 9005-65-6 | 120,74 |
| Citric acid monohydrate | 0,86 |

Five trials were carried out to test the efficacy of the different formulations against whiteflies in greenhouse tomatoes, in Mexico, during November and December 2022.

In each of the tests, four treatments were carried out, corresponding to the application of each of the four formulations above mentioned.

The dose of acetamiprid applied in all treatments was 45g of active substance per hectare.

All trials were set up in commercial tomato production greenhouses in the Mexican states of Guanajuato, Morelos and Michoacan. The trials were performed by an officially recognized research institution in accordance with Good Experimental Practice (GEP) conditions, using a randomized complete block (RCB) design with 4 repetitions. The plots had a width of 4.8 m to 6.0 m (3 double rows), a length of 5 m to 7 m, and the area of the experimental plots ranged from 24.0 m² to 35.7 m².

The tomato varieties used were Cid, Portos, Ramses, Rafaello and Tisey. The interrow spacing varied between 1.6 m and 2.0 m, the spacing in the row varied between 35 cm and 40 cm and the crop BBCH at first spray was between 75 and 89.

The pest present in all tests was *Bemisia tabaci* (BEMITA). Efficacy was assessed by separately counting nymphs and adults on 20 leaflets from plants in the two central rows of the plot.

Evaluations on nymphs are considered more relevant to demonstrate the product's efficacy due to their inability to move across leaves, plants or plots.

A single spray was carried out on both sides of the row, in the presence of the pest, using a spray bar equipped with hollow cone nozzles. The spray volume varied from 650 l/ha to 1000 l/ha, with a work pressure of 14 bar. The spray quality was considered very good.

The results were evaluated 3, 7 and 14 days after application (3DAA, 7DAA and 14DAA in table 4). The results obtained, in percentage efficacy, are presented in table 4.

**Table 4. Tests results**

| | Evaluation moment | Formulation | | | |
|---|---|---|---|---|---|
| | | A30ODHy | A60ODHy | A15SLHy | A200SL |
| Trial 1 | 3 DAA | 59,5 | 57,7 | 38,7 | 48, 6 |
| | 7 DAA | 68,7 | 65,3 | 42 | 57,3 |
| | 14DAA | 41, 9 | 44,5 | 23,3 | 31,7 |
| Trial 2 | 4 DAA | 56,3 | 52,4 | 47, 6 | 50,5 |
| | 7 DAA | 61,3 | 64,4 | 41,7 | 47,2 |
| | 14DAA | 41,1 | 43,2 | 26, 1 | 36,5 |
| Trial 3 | 3 DAA | 38,3 | 41,7 | 33,3 | 38,3 |
| | 7 DAA | 53,2 | 55,3 | 42, 1 | 51, 6 |
| | 14DAA | 32,5 | 29,4 | 18, 6 | 24,7 |
| Trial 4 | 3 DAA | 41,7 | 39,7 | 35,1 | 44,4 |
| | 7 DAA | 51,5 | 53,4 | 46 | 49,7 |
| | 14DAA | 22, 9 | 27,4 | 17,3 | 21,8 |
| Trial 5 | 3 DAA | 36,2 | 39,5 | 31,1 | 35, 6 |
| | 7 DAA | 49,5 | 47,8 | 38,2 | 41, 9 |
| | 14DAA | 19,5 | 17,3 | 11, 9 | 13,8 |

The same trend was observed for the 5 tests, in the 3 evaluation moments. For a dose of 45 g active substance/ha, the two OD formulations according to the invention presented similar values to each other and surpassed both the formulation containing acetamiprid, kumquat oil and blackcurrant seed oil in the form of soluble concentrate (A15SLHy) and the commercial formulation of acetamiprid (A200SL).

## Claims

1. Insecticide formulation presented in the form of an oil dispersion, **characterized by** comprising acetamiprid, kumquat oil and blackcurrant seed oil.

2. Composition according to claim 1, **characterized in that** it comprises acetamiprid, in a concentration range between 30 and 60 g/litre.

3. Composition according to claim 2, **characterized in that** it additionally comprises kumquat oil in a concentration range between 30 and 60 g/litre and blackcurrant seed oil in a concentration range between 200 and 300 g/litre.

4. Composition according to claims 2 and 3, **characterized in that** it comprises 60 g/litre of acetamiprid, 60 g/l of kumquat oil and 300 g/litre of blackcurrant seed oil.

5. Composition according to any one of claims 1 to 4, **characterized in that** it additionally comprises at least one non-aqueous dispersant, at least one emulsifier, at least one aqueous dispersant, at least one thickening agent and at least one vegetable oil or an ester derived from a vegetable oil.

6. Composition according to claim 5, **characterized in that** it comprises 20 to 30 g/litre of at least one non-aqueous dispersant, 150 to 250 g/litre of at least one emulsifier, 20 to 30 g/litre of at least one aqueous dispersant and 20 to 35 g/litre of at least one thickening agent.

7. Process for controlling aphids, thrips and whiteflies in greenhouse horticultural crops and aphids in fruit plants (pome fruits and stone fruits), **characterized in that** it comprises a step of applying the formulation according to claims 1 to 6.

8. Process according to claim 7, **characterized in that** 30 to 60 g/ha of acetamiprid are applied.

9. Process according to claim 8, **characterized in that** 45 g/ha of acetamiprid is applied.
